# EUROPEAN PATENT APPLICATION

(11) **EP 3 742 859 A1**
(43) Date of publication of application: **25.11.2020**
(21) Application number: 18905298.8
(22) Date of filing: 12.02.2018
(51) Int. Cl.: H04W 74/08

(54) **DATA TRANSMISSION METHOD AND COMMUNICATION DEVICE**

(71) Applicant: HUAWEI TECHNOLOGIES CO., LTD., Shenzhen, Guangdong 518129 (CN)
(72) Inventor: ZHAO, Yue, Shenzhen, Guangdong 518129 (CN); YU, Zheng, Shenzhen, Guangdong 518129 (CN)
(74) Representative: Thun, Clemens
(86) International application number: PCT/CN2018/076453
(87) International publication number: WO 2019/153332

(57) **Abstract**

Embodiments of this application discloses a data transmission method, including: receiving, by a terminal device, first DCI from a network device, where the first DCI is used to indicate the terminal device to transmit a first Msg 3 or a second Msg 3 on a first physical uplink shared channel PUSCH indicated by the first DCI, the first Msg 3 is an uplink message that is scheduled by a random access response message in a random access procedure and that does not carry user data, and the second Msg 3 is an uplink message that is scheduled by a random access response message in a random access procedure and that carries user data; transmitting the first Msg 3 or the second Msg 3 on the first PUSCH; receiving, by the terminal device, second DCI from the network device; and stopping transmitting the first Msg 3 or the second Msg 3. It can be learned that utilization of a transmission resource is improved by stopping message transmission in advance based on a network indication.

## Description

### TECHNICAL FIELD

Embodiments of this application relate to the field of communications technologies, and in particular, to a data transmission method and a communications device.

### BACKGROUND

A random access procedure refers to a process from a moment at which a terminal device sends a random access preamble in an attempt to connect to a network device to a moment at which a basic signaling connection is established between the terminal device and the network device.

The random access procedure is completed in four steps. Each of the steps includes a message (message, Msg). In related communications standards, the four messages are referred to as an Msg 1, an Msg 2, an Msg 3, and an Msg 4.

The Msg 1 is a random access message sent by the terminal device to the network device. The Msg 2 is a random access response (random access response, RAR) message sent by the network device to the terminal device. The Msg 3 is a message transmitted, on an uplink transmission resource allocated by the network device, by the terminal device after the terminal device receives the Msg 2. The Msg 3 supports a hybrid automatic repeat request (hybrid automatic repeat request, HARQ).

The random access procedure also supports transmitting user data in advance, and the Msg 3 may be used to transmit uplink data in advance. In other words, the terminal device sends, to the network device, the Msg 3 along with the user data.

In a HARQ mechanism, the terminal device transmits the Msg 3 based on a maximum quantity of HARQ transmissions and a quantity of repeated transmissions, where the maximum quantity of HARQ transmissions and the quantity of repeated transmissions are configured by the network device. For example, the maximum quantity of HARQ transmissions is 8, and the quantity of repeated transmissions is 64. The network device feeds back acknowledgement information to the terminal device every 64 repeated transmissions performed by the terminal device. Even if the network device receives the Msg 3 during a first repeated transmission, the terminal device continues to repeatedly transmit the Msg 3 for 64 times. This undoubtedly wastes bountiful transmission resources.

### SUMMARY

To improve utilization of a transmission resource in a network, embodiments of this application provide a data transmission method and a corresponding communications device.

A first aspect of the embodiments of this application provides a data transmission method, including: receiving, by a terminal device, first downlink control information (downlink control information, DCI) from a network device, where the first DCI is used to indicate the terminal device to transmit a first Msg 3 or a second Msg 3 on a first physical uplink shared channel (physical uplink shared channel, PUSCH) indicated by the first DCI, the first Msg 3 is an uplink message that is scheduled by a random access response message in a random access procedure and that does not carry user data, and the second Msg 3 is an uplink message that is scheduled by a random access response message in a random access procedure and that carries user data; transmitting, by the terminal device, the first Msg 3 or the second Msg 3 on the first PUSCH based on the first DCI; receiving, by the terminal device, second DCI from the network device, where the second DCI is used to indicate the terminal device to stop transmitting the first Msg 3 or the second Msg 3; and stopping, by the terminal device based on the second DCI, transmitting the first Msg 3 or the second Msg 3. The user data in the embodiments of this application is user plane data (user data) or a non-access stratum (non-access stratum, NAS) message. It can be learned from the first aspect that, before a quantity of repeated transmissions is reached in a process of transmitting the first Msg 3 or the second Msg 3, the terminal device may stop transmitting the first Msg 3 or the second Msg 3 based on an indication in DCI delivered by the network device. This avoids a waste of transmission resources and improves utilization of transmission resources.

With reference to the first aspect of this application, in a first possible implementation of the first aspect, a field that is in the first DCI and used to indicate to transmit the first Msg 3 or the second Msg 3, and a field that is in the second DCI and used to indicate to stop transmitting the first Msg 3 or the second Msg 3 are: a field in the first DCI and a field in the second DCI respectively that have been set in a standard and are used to indicate NDIs (new data indicator, NDI), a field in the first DCI and a field in the second DCI respectively that have been set in a standard and are used to indicate HARQ process number (HARQ process number) information, or a newly added field in the first DCI and a newly added field in the second DCI respectively. For a field that has been set in a standard and used to indicate an NDI or a HARQ process number, the standard in the embodiments of this application may be the 3rd Generation Partnership Project (3rd Generation Partnership Project, 3GPP) standard 36.212 protocol R13 or a later version. It can be learned from the first possible implementation of the first aspect that, because a retransmission process requires neither a field used to indicate HARQ process number information nor a field used to indicate a new data indicator NDI, a field that has been set in a standard and is used to indicate HARQ process number information or a new data indicator NDI is used to indicate to transmit the first Msg 3 or the second Msg 3, or indicate to stop transmitting the first Msg 3 or the second Msg 3. Therefore, data transmission may be stopped in advance without adding an additional indication field.

With reference to the first aspect or the first implementation of the first aspect of this application, in a second possible implementation, the data transmission method further includes: receiving, by the terminal device, third DCI from the network device, where the third DCI is used to indicate the terminal device to transmit a third Msg 3 on a second PUSCH indicated by the third DCI, and the third Msg 3 is an uplink message that is scheduled by a random access response message in a random access procedure and that carries user data; transmitting, by the terminal device, the third Msg 3 on the second PUSCH based on the third DCI; receiving, by the terminal device, fourth DCI from the network device, where the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data; and transmitting, by the terminal device based on the fourth DCI, the fourth Msg 3 on a PUSCH indicated by the fourth DCI. It can be learned from the second possible implementation of the first aspect that when a channel transmission condition is not good, a backoff from transmitting the third Msg 3 that carries the user data to transmitting the fourth Msg 3 that does not carry the user data may further be performed. This may improve a success rate of transmitting the fourth Msg 3 that does not carry the user data.

With reference to the second possible implementation of the first aspect of this application, in a third possible implementation, a field that is in the third DCI and used to indicate to transmit the third Msg 3, and a field that is in the fourth DCI and used to indicate the terminal device to back off from transmitting the third Msg 3 to transmitting the fourth Msg 3 are: a field in the third DCI and a field in the fourth DCI respectively that have been set in a standard and are used to indicate NDIs, a field in the third DCI and a field in the fourth DCI respectively that have been set in a standard and are used to indicate HARQ process number information, or a newly added field in the first DCI and a newly added field in the second DCI respectively. It can be learned from the third possible implementation of the first aspect that, because a retransmission process requires neither a field used to indicate HARQ process number information nor a field used to indicate a new data indicator NDI, a field that has been set in a standard and is used to indicate HARQ process number information or a new data indicator NDI is used to indicate to transmit the third Msg 3, or indicate to back off from transmitting the third Msg 3 to transmitting the fourth Msg 3. Therefore, a backoff may be performed without adding an additional indication field.

With reference to the first aspect, in a fourth possible implementation, the method further includes: receiving, by the terminal device, fifth DCI from the network device, where the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data; transmitting, by the terminal device, the fifth Msg 3 on the third PUSCH based on a field that is in the fifth DCI and that indicates transport block size information, where a transport block size indicated by the field that is in the fifth DCI and that indicates the transport block size information is equal to a parameter value, the parameter value is a size that is of a transport block occupied by the fifth Msg 3 and that is indicated in a random access response (RAR), the RAR indicates the fifth Msg 3, and the parameter value is the size of the transport block occupied by the fifth Msg 3; receiving, by the terminal device, sixth DCI from the network device; and backing off, by the terminal device based on a field that is in the sixth DCI and that indicates transport block size information, from transmitting the fifth Msg 3 to transmitting a sixth Msg 3 on a PUSCH indicated by the sixth DCI, where a transport block size indicated by the field that is in the sixth DCI and that indicates the transport block size information is less than the parameter value, and the sixth Msg 3 is an uplink message that is scheduled by a random access response message in a random access procedure and that does not carry user data. It can be learned from the fourth possible implementation of the first aspect that when a channel transmission condition is not good, a field used to indicate transport block size information may be further used to indicate to back off from transmitting the fifth Msg 3 that carries the user data to transmitting the sixth Msg 3 that does not carry the user data. This may improve a success rate of transmitting the sixth Msg 3 that does not carry the user data.

With reference to the first aspect, in a fifth possible implementation, the method further includes: receiving, by the terminal device, radio resource control RRC signaling sent by the network device, where the RRC signaling is used to indicate to determine a maximum quantity of hybrid automatic repeat request HARQ transmissions of the second Msg 3; determining, by the terminal device, the maximum quantity of HARQ transmissions of the second Msg 3 based on the RRC signaling; and transmitting, by the terminal device, the second Msg 3 based on the maximum quantity of HARQ transmissions of the second Msg 3. In this implementation, only the second Msg 3 is used for description. Actually, other Msgs 3 carrying user data, such as the third Msg 3 and the fifth Msg 3, may all be transmitted based on maximum quantities, determined using the solution in this implementation, of HARQ transmissions of the Msgs 3. It can be learned from the fifth possible implementation of the first aspect that, because a transport block occupied by the Msg 3 carrying user data is larger in size, a maximum quantity of HARQ transmissions of the Msg 3 carrying the user data needs to be increased, to avoid frequent packet losses.

With reference to the first aspect or any of the first to the fifth implementations of the first aspect, in a sixth possible implementation, the determining, by the terminal device, the maximum quantity of hybrid automatic repeat request HARQ transmissions of the second Msg 3 based on the RRC signaling includes: determining, by the terminal device, the maximum quantity of HARQ transmissions of the second Msg 3 based on a first information element and a second information element; or determining, by the terminal device, the maximum quantity of HARQ transmissions of the second Msg 3 based on a third information element; where the first information element is an information element that is in the RRC signaling and that is used to determine the maximum quantity of HARQ transmissions of the second Msg 3, and the first information element is used to indicate a value in a first set; the second information element is an information element that is in the RRC signaling and that is used to determine a maximum quantity of HARQ transmissions of the first Msg 3, the second information element is used to indicate a value in a second set, and the first set is different from the second set; and the third information element is an information element that is in the RRC signaling and that is used to determine the maximum quantity of HARQ transmissions of the second Msg 3, and the third information element is used to indicate a value in a third set. The first set may be {1, 2, 4}, the second set may be {1, 2, 3, 4, 5, 6, 7, 8}, and the third set includes more information elements than the second set. For example, the third set is {1, 2, 3, 4, 5, 6, 7, 8, 10, 12, 16, 20, 24, 28}, or {1, 2, 3, 4, 5, 6, 7, 8, 10, 12, 16, 20, 24, 28, spare1, spare2}. spare1 and spare2 are positive integers, and spare1 is not equal to spare2. That the maximum quantity of HARQ transmissions of the second Msg 3 is determined based on the first information element and the second information element may be: selecting the value 4 from the first set as the first information element, selecting the value 8 from the second set as the second information element, and using a product of 4 and 8 as the maximum quantity of HARQ transmissions of the second Msg 3. It can be learned from the first set that only 2 bits are required to indicate the three values in the first set. A product of the value in the first set and a value in the second set can be further used to ensure a maximum of 32 HARQ transmissions of the second Msg 3. For example, that the maximum quantity of HARQ transmissions of the second Msg 3 is determined based on the third information element may be determining, based on the value 16 in the third set, that the maximum quantity of HARQ transmissions of the second Msg 3 is 16. Certainly, another value in the third set may alternatively be used to determine the maximum quantity of HARQ transmissions of the second Msg 3. It can be learned from the sixth possible implementation that, that the third set is greater than the second set means: The third set includes more information elements than the second set, and a maximum value of an information element in the third set is greater than a maximum value of an information element in the second set. In this manner, a product does not need to be calculated, and only one set is used to ensure that the maximum quantity of HARQ transmissions of the second Msg 3 may be a relatively large value. Therefore, in the sixth possible implementation of the first aspect, a success rate of transmitting an Msg 3 carrying data may be improved.

With reference to the sixth possible implementation of the first aspect, in a seventh possible implementation, the determining, by the terminal device, the maximum quantity of HARQ transmissions of the second Msg 3 based on a first information element and a second information element includes: determining, by the terminal device, a first value based on the first information element, and determining a second value based on the second information element; and using, by the terminal device, a product of the first value and the second value as the maximum quantity of HARQ transmissions of the second Msg 3. It can be learned from the seventh possible implementation of the first aspect that the maximum quantity of HARQ transmissions of the second Msg 3 is determined by a product of two values. This may effectively increase a maximum quantity of HARQ transmissions of an Msg 3 that carries data, and further improves a success rate of transmitting the Msg 3 that carries data.

A second aspect of this application provides a data transmission method, including: receiving, by a terminal device, third DCI from a network device, where the third DCI is used to indicate the terminal device to transmit a third Msg 3 on a second PUSCH indicated by the third DCI, and the third Msg 3 is an uplink message that is scheduled by a random access response message in a random access procedure and that carries user data; transmitting, by the terminal device, the third Msg 3 on the second PUSCH based on the third DCI; receiving, by the terminal device, fourth DCI from the network device, where the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data; and transmitting, by the terminal device based on the fourth DCI, the fourth Msg 3 on a PUSCH indicated by the fourth DCI. It can be learned from the second aspect that when a channel transmission condition is not good, a backoff from transmitting the third Msg 3 that carries the user data to transmitting the fourth Msg 3 that does not carry the user data may further be performed. This may improve a success rate of transmitting the fourth Msg 3 that does not carry the user data.

With reference to the second aspect of this application, in a first possible implementation, a field that is in the third DCI and used to indicate to transmit the third Msg 3, and a field that is in the fourth DCI and used to indicate the terminal device to back off from transmitting the third Msg 3 to transmitting the fourth Msg 3 are: a field in the third DCI and a field in the fourth DCI respectively that have been set in a standard and are used to indicate NDIs, a field in the third DCI and a field in the fourth DCI respectively that have been set in a standard and are used to indicate HARQ process number information, or a newly added field in the first DCI and a newly added field in the second DCI respectively. It can be learned from the first possible implementation of the second aspect that, because a retransmission process requires neither a field used to indicate HARQ process number information nor a field used to indicate a new data indicator NDI, a field that has been set in a standard and is used to indicate HARQ process number information or a new data indicator NDI is used to indicate to transmit the third Msg 3, or indicate to back off from transmitting the third Msg 3 to transmitting the fourth Msg 3. Therefore, a backoff may be performed without adding an additional indication field.

A third aspect of this application provides a data transmission method, including: receiving, by a terminal device, fifth DCI from a network device, where the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data; transmitting, by the terminal device, the fifth Msg 3 on the third PUSCH based on a field that is in the fifth DCI and that indicates transport block size information, where a transport block size indicated by the field that is in the fifth DCI and that indicates the transport block size information is equal to a parameter value, the parameter value is a size that is of a transport block occupied by the fifth Msg 3 and that is indicated in a random access response RAR, the RAR indicates the fifth Msg 3, and the parameter value is the size of the transport block occupied by the fifth Msg 3; receiving, by the terminal device, sixth DCI from the network device; and backing off, by the terminal device based on a field that is in the sixth DCI and that indicates transport block size information, from transmitting the fifth Msg 3 to transmitting a sixth Msg 3 on a PUSCH indicated by the sixth DCI, where a transport block size indicated by the field that is in the sixth DCI and that indicates the transport block size information is less than the parameter value, and the sixth Msg 3 is an uplink message that is scheduled by a random access response message in a random access procedure and that does not carry user data. It can be learned from the third aspect that when a channel transmission condition is not good, a field used to indicate transport block size information may be further used to indicate to back off from transmitting the fifth Msg 3 that carries the user data to transmitting the sixth Msg 3 that does not carry the user data. This may improve a success rate of transmitting the sixth Msg 3 that does not carry the user data.

A fourth aspect of this application provides a data transmission method, including: sending, by a network device, first downlink control information DCI to a terminal device, where the first DCI is used to indicate the terminal device to transmit a first Msg 3 or a second Msg 3 on a first physical uplink shared channel PUSCH indicated by the first DCI, the first Msg 3 is an uplink message that is scheduled by a random access response message in a random access procedure and that does not carry user data, and the second Msg 3 is an uplink message that is scheduled by a random access response message in a random access procedure and that carries user data; receiving, by the network device on the first PUSCH, the first Msg 3 or the second Msg 3 transmitted by the terminal device; and sending, by the network device, second DCI to the terminal device, where the second DCI is used to indicate the terminal device to stop transmitting the first Msg 3 or the second Msg 3. It can be learned from the fourth aspect that the network device has correctly received the first Msg 3 or the second Msg 3 before a quantity of repeated transmissions is reached in a process of transmitting the first Msg 3 or the second Msg 3 by the terminal device. Therefore, the network device may deliver DCI to the terminal device to indicate the terminal device to stop transmitting the first Msg 3 or the second Msg 3. This avoids a waste of transmission resources and improves utilization of transmission resources.

With reference to the fourth aspect, in a first possible implementation, a field that is in the first DCI and used to indicate to transmit the first Msg 3 or the second Msg 3, and a field that is in the second DCI and used to indicate to stop transmitting the first Msg 3 or the second Msg 3 are: a field in the first DCI and a field in the second DCI respectively that have been set in a standard and are used to indicate NDIs, a field in the first DCI and a field in the second DCI respectively that have been set in a standard and are used to indicate hybrid automatic repeat request HARQ process number information, or a newly added field in the first DCI and a newly added field in the second DCI respectively. It can be learned from the first possible implementation of the fourth aspect that, because a retransmission process requires neither a field used to indicate HARQ process number information nor a field used to indicate a new data indicator NDI, a field that has been set in a standard and is used to indicate HARQ process number information or a new data indicator NDI is used to indicate to transmit the first Msg 3 or the second Msg 3, or indicate to stop transmitting the first Msg 3 or the second Msg 3. Therefore, data transmission may be stopped in advance without adding an additional indication field.

With reference to the fourth aspect or the first possible implementation of the fourth aspect, in a second possible implementation, the method further includes: sending, by the network device, third DCI to the terminal device, where the third DCI is used to indicate the terminal device to transmit a third Msg 3 on a second PUSCH indicated by the third DCI, and the third Msg 3 is an uplink message that is scheduled by a random access response message in a random access procedure and that carries user data; receiving, by the network device on the second PUSCH, the third Msg 3 transmitted by the terminal device; and sending, by the network device, fourth DCI to the terminal device, where the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data. It can be learned from the second possible implementation of the first aspect that when a channel transmission condition is not good, the network device may indicate the terminal device to back off from transmitting the third Msg 3 that carries the user data to transmitting the fourth Msg 3 that does not carry the user data. This may improve a success rate of transmitting the fourth Msg 3 that does not carry the user data.

With reference to the second possible implementation of the fourth aspect, in a third possible implementation, a field that is in the third DCI and used to indicate to transmit the third Msg 3, and a field that is in the fourth DCI and used to indicate the terminal device to back off from transmitting the third Msg 3 to transmitting the fourth Msg 3 are: a field in the third DCI and a field in the fourth DCI respectively that have been set in a standard and are used to indicate NDIs, a field in the third DCI and a field in the fourth DCI respectively that have been set in a standard and are used to indicate hybrid automatic repeat request HARQ process number information, or a newly added field in the first DCI and a newly added field in the second DCI respectively. It can be learned from the third possible implementation of the fourth aspect that, because a retransmission process requires neither a field used to indicate HARQ process number information nor a field used to indicate a new data indicator NDI, a field that has been set in a standard and is used to indicate HARQ process number information or a new data indicator NDI is used to indicate to transmit the third Msg 3, or indicate to back off from transmitting the third Msg 3 to transmitting the fourth Msg 3. Therefore, a backoff may be performed without adding an additional indication field.

With reference to the fourth aspect, in a fourth possible implementation, the method further includes: sending, by the network device, fifth DCI to the terminal device, where the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data; receiving, by the network device on the third PUSCH, the fifth Msg 3 transmitted by the terminal device based on a field that is in the fifth DCI and that indicates transport block size information, where a transport block size indicated by the field that is in the fifth DCI and that indicates the transport block size information is equal to a parameter value, and the parameter value is a size that is of a transport block occupied by the fifth Msg 3 and that is indicated in a random access response RAR; sending, by the network device, sixth DCI to the terminal device; and receiving, by the network device, a sixth Msg 3 on a PUSCH indicated by the sixth DCI, where a transport block size indicated by a field that is in the sixth DCI and that indicates transport block size information is less than the parameter value, and the sixth Msg 3 is an uplink message that is scheduled by a random access response message in a random access procedure and that does not carry user data. It can be learned from the fourth possible implementation of the fourth aspect that when a channel transmission condition is not good, the network device may further indicate, through a field used to indicate transport block size information, the terminal device to back off from transmitting the fifth Msg 3 that carries the user data to transmitting the sixth Msg 3 that does not carry the user data. This may improve a success rate of transmitting the sixth Msg 3 that does not carry the user data.

A fifth aspect of this application provides a data transmission method, including: sending, by a network device, third DCI to a terminal device, where the third DCI is used to indicate the terminal device to transmit a third Msg 3 on a second PUSCH indicated by the third DCI, and the third Msg 3 is an uplink message that is scheduled by a random access response message in a random access procedure and that carries user data; receiving, by the network device on the second PUSCH, the third Msg 3 transmitted by the terminal device; and sending, by the network device, fourth DCI to the terminal device, where the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data. It can be learned from the fifth aspect that when a channel transmission condition is not good, the network device may indicate the terminal device to back off from transmitting the third Msg 3 that carries the user data to transmitting the fourth Msg 3 that does not carry the user data. This may improve a success rate of transmitting the fourth Msg 3 that does not carry the user data.

With reference to the fifth aspect, in a first possible implementation, a field that is in the third DCI and used to indicate to transmit the third Msg 3, and a field that is in the fourth DCI and used to indicate the terminal device to back off from transmitting the third Msg 3 to transmitting the fourth Msg 3 are: a field in the third DCI and a field in the fourth DCI respectively that have been set in a standard and are used to indicate NDIs, a field in the third DCI and a field in the fourth DCI respectively that have been set in a standard and are used to indicate hybrid automatic repeat request HARQ process number information, or a newly added field in the first DCI and a newly added field in the second DCI respectively. It can be learned from the first possible implementation of the fifth aspect that, because a retransmission process requires neither a field used to indicate HARQ process number information nor a field used to indicate a new data indicator NDI, a field that has been set in a standard and is used to indicate HARQ process number information or a new data indicator NDI is used to indicate to transmit the third Msg 3, or indicate to back off from transmitting the third Msg 3 to transmitting the fourth Msg 3. Therefore, a backoff may be performed without adding an additional indication field.

A sixth aspect of this application provides a data transmission method, including: sending, by a network device, fifth DCI to a terminal device, where the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data; receiving, by the network device on the third PUSCH, the fifth Msg 3 transmitted by the terminal device based on a field that is in the fifth DCI and that indicates transport block size information, where a transport block size indicated by the field that is in the fifth DCI and that indicates the transport block size information is equal to a parameter value, and the parameter value is a size that is of a transport block occupied by the fifth Msg 3 and that is indicated in a random access response RAR; sending, by the network device, sixth DCI to the terminal device; and receiving, by the network device, a sixth Msg 3 on a PUSCH indicated by the sixth DCI, where a transport block size indicated by a field that is in the sixth DCI and that indicates transport block size information is less than the parameter value, and the sixth Msg 3 is an uplink message that is scheduled by a random access response message in a random access procedure and that does not carry user data. It can be learned from the sixth aspect that when a channel transmission condition is not good, the network device may further indicate, through a field used to indicate transport block size information, the terminal device to back off from transmitting the fifth Msg 3 that carries the user data to transmitting the sixth Msg 3 that does not carry the user data. This may improve a success rate of transmitting the sixth Msg 3 that does not carry the user data.

A seventh aspect of this application provides a communications device. The communications device may be a terminal device, or may be a chip system. The communications device includes a receiving unit, a processing unit, and a sending unit. The receiving unit is configured to perform a step related to a receiving operation in the first aspect, the second aspect, the third aspect, or any possible implementation thereof. The processing unit is configured to perform a step related to a processing operation in the first aspect, the second aspect, the third aspect, or any possible implementation thereof. The sending unit is configured to perform a step related to a sending operation in the first aspect, the second aspect, the third aspect, or any possible implementation thereof.

An eighth aspect of this application provides a communications device. The communications device may be a network device, or may be a chip system. The communications device includes a receiving unit and a sending unit. The receiving unit is configured to perform a step related to a receiving operation in the fourth aspect, the fifth aspect, the sixth aspect, or any possible implementation thereof. The sending unit is configured to perform a step related to a sending operation in the fourth aspect, the fifth aspect, the sixth aspect, or any possible implementation thereof. The communications device may further include a processing unit, and the processing unit is configured to perform a step of determining each piece of DCI before the sending unit sends the DCI.

A ninth aspect of this application provides a communications device. The communications device may be a terminal device, or may be a chip system. The communications device includes a memory, a transceiver, and at least one processor. The memory stores an instruction. The memory, the transceiver, and the at least one processor are interconnected by a line. The transceiver is configured to perform operations of message sending and receiving on a communications device side in the first aspect, the second aspect, the third aspect, or any possible implementation thereof. The operations of signal sending and receiving herein may be operations of receiving DCI and transmitting an Msg 3 in the first aspect, the second aspect, the third aspect, or any possible implementation thereof.

A tenth aspect of this application provides a communications device. The communications device may be a network device, or may be a chip system. The communications device includes a memory, a transceiver, and at least one processor. The memory stores an instruction. The memory, the transceiver, and the at least one processor are interconnected by a line. The transceiver is configured to perform operations of message sending and receiving on a communications device side in the fourth aspect, the fifth aspect, the sixth aspect, or any possible implementation thereof. The operations of signal sending and receiving herein may be operations of sending DCI and receiving an Msg 3 in the fourth aspect, the fifth aspect, the sixth aspect, or any possible implementation thereof.

An eleventh aspect of this application provides a chip system, where the chip system is applied to a terminal device. The chip system includes at least one processor and a communications interface, and may further include a memory. The memory, the communications interface, and the at least one processor are interconnected by a line. The at least one memory stores an instruction, and the instruction is executed by the processor, to perform an operation of the terminal device in the first aspect, the second aspect, the third aspect, or any possible implementation thereof.

A twelfth aspect of this application provides a chip system, where the chip system is applied to a network device. The chip system includes at least one processor and a communications interface, and may further include a memory. The memory, the communications interface, and the at least one processor are interconnected by a line. The at least one memory stores an instruction, and the instruction is executed by the processor, to perform an operation of the network device in the fourth aspect, the fifth aspect, the sixth aspect, or any possible implementation thereof.

A thirteenth aspect of this application provides a computer-readable storage medium, where the computer-readable storage medium is applied to a terminal device. The computer-readable storage medium stores an instruction, and when the instruction is run on a computer, the computer is enabled to perform the method in the first aspect, the second aspect, the third aspect, or any possible implementation thereof.

A fourteenth aspect of this application provides a computer-readable storage medium, where the computer-readable storage medium is applied to a network device. The computer-readable storage medium stores an instruction, and when the instruction is run on a computer, the computer is enabled to perform the method in the fourth aspect, the fifth aspect, the sixth aspect, or any possible implementation thereof.

A fifteenth aspect of this application provides a computer program product including an instruction, where the computer program product is applied to a terminal device. The program runs on a computing device, to perform an operation of the terminal device in the first aspect, the second aspect, the third aspect, or any possible implementation thereof.

A sixteenth aspect of this application provides a computer program product including an instruction, where the computer program product is applied to a network device. The program runs on a computing device, to perform an operation of the network device in the fourth aspect, the fifth aspect, the sixth aspect, or any possible implementation thereof.

Still another aspect of this application provides a communications system, including a terminal device and a network device. The terminal device is the terminal device in the first aspect, the second aspect, the third aspect, or any possible implementation thereof. The network device is the network device in the fourth aspect, the fifth aspect, the sixth aspect, or any possible implementation thereof.

According to the data transmission method provided in the embodiments of this application, after correctly receiving an Msg 3 in a process of transmitting the Msg 3 between the terminal device and the network device, the network device may deliver DCI to indicate the terminal device to stop transmitting the Msg 3. In this way, before a quantity of repeated transmissions is reached in a process of transmitting the Msg 3, the terminal device may stop transmitting the Msg 3 based on an indication in downlink control information delivered by the network device. This avoids a waste of transmission resources and improves utilization of transmission resources. The Msg 3 may be a message that does not carry user data, or may be a message that carries user data.

### BRIEF DESCRIPTION OF DRAWINGS

FIG. 1 is a schematic diagram of an embodiment of a communications system according to an embodiment of this application;
FIG. 2 is a schematic diagram of another embodiment of a communications system according to an embodiment of this application;
FIG. 3 is a schematic diagram of an embodiment of a data transmission method according to an embodiment of this application;
FIG. 4 is a schematic diagram of another embodiment of a data transmission method according to an embodiment of this application;
FIG. 5 is a schematic diagram of another embodiment of a data transmission method according to an embodiment of this application;
FIG. 6 is a schematic diagram of an embodiment of a communications device according to an embodiment of this application;
FIG. 7 is a schematic diagram of another embodiment of a communications device according to an embodiment of this application;
FIG. 8 is a schematic diagram of an embodiment of a terminal device according to an embodiment of this application; and
FIG. 9 is a schematic diagram of an embodiment of a chip system according to an embodiment of this application.

### DESCRIPTION OF EMBODIMENTS

The following describes embodiments of this application with reference to the accompanying drawings. It is clear that the described embodiments are merely some rather than all of the embodiments of this application. A person of ordinary skill in the art may learn that as a new technology emerges, the technical solutions provided in the embodiments of this application are also applicable to a similar technical problem.

The embodiments of this application provide a data transmission method. Before a quantity of repeated transmissions is reached in a process of transmitting an Msg 3, the terminal device may stop transmitting the Msg 3 based on an indication in downlink control information (downlink control information, DCI) delivered by a network device. This avoids a waste of transmission resources and improves utilization of transmission resources. The embodiments of this application further provide a communications device. Detailed descriptions are provided below.

Terms "uplink" and "downlink" in this application are used to describe data/information transmission directions in some scenarios. For example, an "uplink" direction is a direction in which data/information is transmitted from a terminal device to a network side, and a "downlink" direction is a direction in which data/information is transmitted from a network side device to the terminal device. "Uplink" and "downlink" are used to describe only directions. Neither a specific device from which data/information transmission starts nor a specific device at which data/information transmission stops is limited.

The term "and/or" in this application may be an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In this application, names may be assigned to various types of objects such as messages/information/devices/network elements/systems/apparatuses/actions/operations/procedures/concepts. However, these specific names do not constitute a limitation to related objects. The assigned names may vary with a factor such as a scenario, a context, or a usage habit. An understanding of a technical meaning of a related object should be mainly determined from a function and a technical effect that are embodied/performed in a technical solution.

In the specification, claims, and accompanying drawings of this application, terms "first", "second", and the like are intended to distinguish similar objects but do not necessarily indicate a specific order or sequence. It should be understood that the data used in such a way are interchangeable in appropriate circumstances, so that the embodiments described herein can be implemented in other orders than the content illustrated or described herein. Moreover, terms "include", "have" and any other variant thereof are intended to cover non-exclusive inclusion. For example, a process, a method, a system, a product, or a device that includes a series of steps or modules is not necessarily limited to expressly listing those steps or modules, but may include other steps or modules not expressly listed or inherent to the process, the method, the system, the product, or the device. Naming or numbering of the steps in this application does not mean that the steps in the method procedures need to be performed in a time/logical sequence indicated by naming or numbering. An execution order of the steps in the procedures that have been named or numbered can be changed according to technical objectives to be achieved, as long as same or similar technical effects can be achieved. Module division in this application is logical division and may be other division in actual implementation. For example, a plurality of modules may be combined or integrated into another system, or some features may be ignored or not performed. In addition, the displayed or discussed mutual couplings, direct couplings, or communication connections may be implemented through some interfaces. Indirect couplings or communication connections between the modules may be implemented in electronic or another form. This is not limited in this application. In addition, modules or submodules described as separate components may be or may not be physically separated, or may be or may not be physical modules, or may be distributed on a plurality of circuit modules. Objectives of the solutions of this application may be achieved by selecting some or all of the modules based on actual demands.

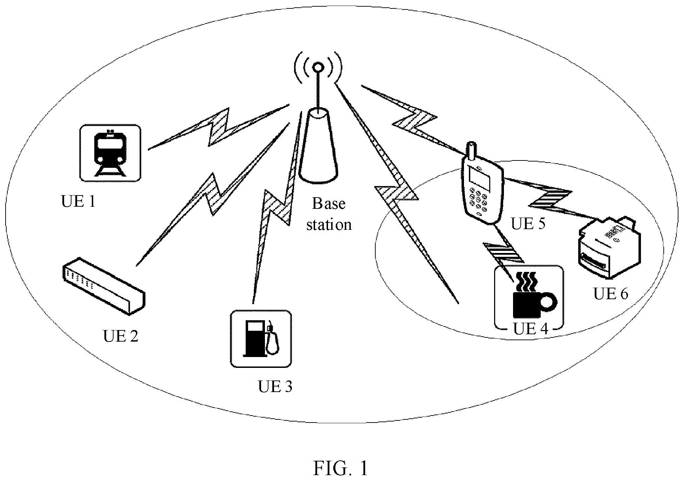

FIG. 1 is a schematic diagram of an embodiment of a communications system according to an embodiment of this application.

As shown in FIG. 1, the communications system includes a network device and a terminal device.

In this embodiment of this application, the network device is an apparatus deployed in a radio access network, to provide a wireless communication function for the terminal device. The network device may include a macro base station, a micro base station (also referred to as a small cell), a relay station, an access point, and the like in various forms. In a system in which different radio access technologies are used, a device having a base station function may be termed differently. For example, the device is referred to as an evolved NodeB (evolved NodeB, eNB or eNodeB) in an LTE system, a NodeB (Node B) in a 3rd generation (3rd Generation, 3G) system, a wireless network access device in a 5th generation (3rd Generation, 5G) system, or the like. For ease of description, in the embodiments of this application, the foregoing apparatuses that provide a wireless communication function for the terminal are collectively referred to as the network device, or a base station, or a BS.

The terminal device in the embodiments of this application may include various handheld devices, vehicle-mounted devices, wearable devices, or computing devices that have a wireless communication function, or other processing devices connected to a wireless modem. The terminal may be a mobile station (Mobile Station, MS), a subscriber unit (subscriber unit), a cellular phone (cellular phone), a smartphone (smart phone), a wireless data card, a personal digital assistant (Personal Digital Assistant, PDA for short) computer, a tablet computer, a wireless modem (modem), a handheld (handset) device, a laptop computer (laptop computer), a machine type communication (Machine Type Communication, MTC) terminal, or the like.

The communications system in FIG. 1 includes a base station (Base station) and user equipments (user equipment) UE 1 to UE 6. In the communications system, the base station sends a scheduling message to one or more of the UE1 to the UE6. In addition, the three user equipments UE 4, UE 5, and UE 6 may also constitute a communications system. In the communications system, the UE 5 may send scheduling information to either or both of the UE 4 and the UE 6. In this case, the UE 5 serves as a base station.

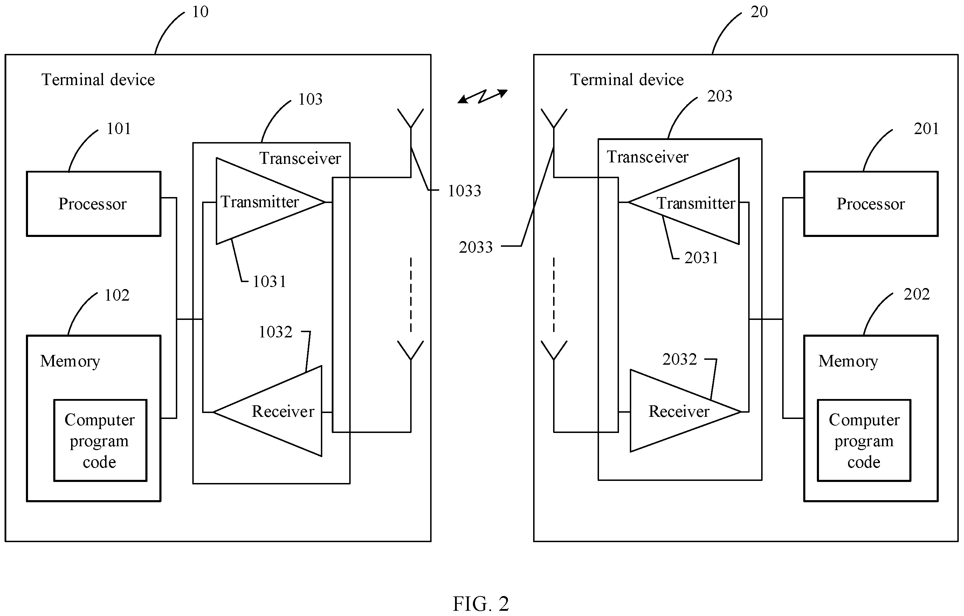

The communications system shown in FIG. 1 may alternatively be represented in another form. As shown in FIG. 2, the communications system includes a terminal device 10 and a network device 20. The terminal device 10 includes a processor 101, a memory 102, and a transceiver 103. The transceiver 103 includes a transmitter 1031, a receiver 1032, and an antenna 1033. The receiver 1032 may be configured to receive, through the antenna 1033, various types of DCI sent by the network device 20. The transmitter 1031 may be configured to send various Msgs 3 to the network device 20 through the antenna 1033. The network device 20 includes a processor 201, a memory 202, and a transceiver 203. The transceiver 203 includes a transmitter 2031, a receiver 2032, and an antenna 2033. The transmitter 2031 may be configured to send various types of DCI to the terminal device 10 through the antenna 2033. The receiver 2032 may be configured to receive, through the antenna 2033, various Msgs 3 sent by the terminal device 10.

The foregoing describes structures of the communications system, the terminal device, and the network device. The following describes a data transmission process between the terminal device and the network device.

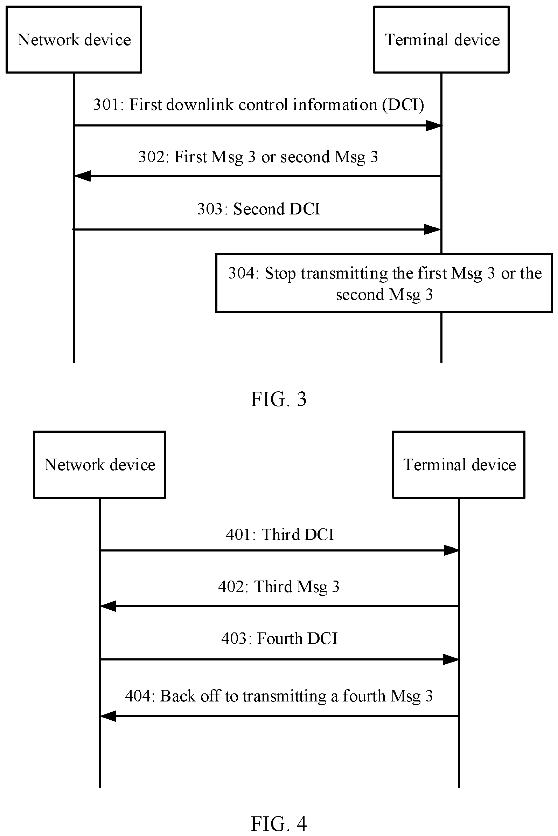

As shown in FIG. 3, an embodiment of a data transmission method provided in an embodiment of this application includes the following steps.

301: A network device sends first DCI to a terminal device.

The first DCI is used to indicate the terminal device to transmit a first Msg 3 or a second Msg 3 on a first physical uplink shared channel PUSCH indicated by the first DCI. The first Msg 3 is an uplink message that is scheduled by a random access response message in a random access procedure and that does not carry user data. The second Msg 3 is an uplink message that is scheduled by a random access response message in a random access procedure and that carries user data. The user data in the embodiments of this application is user plane data (user data) or a non-access stratum (non-access stratum, NAS) message.

302: After receiving the first DCI, the terminal device transmits the first Msg 3 or the second Msg 3 on the first PUSCH based on the first DCI.

303: The network device sends second DCI to the terminal device.

The second DCI is used to indicate the terminal device to stop transmitting the first Msg 3 or the second Msg 3.

It should be noted that if the first Msg 3 is transmitted on the first PUSCH, the second DCI indicates to stop transmitting the first Msg 3. If the second Msg 3 is transmitted on the first PUSCH, the second DCI indicates to stop transmitting the second Msg 3.

304: After receiving the second DCI, the terminal device stops transmitting the first Msg 3 or the second Msg 3 based on the second DCI.

If the first Msg 3 is transmitted on the first PUSCH, the terminal device stops transmitting the first Msg 3. If the second Msg 3 is transmitted on the first PUSCH, the terminal device stops transmitting the second Msg 3.

It can be learned from the embodiment of the data transmission method corresponding to FIG. 3 that the network device has correctly received the first Msg 3 or the second Msg 3 before a quantity of repeated transmissions is reached in a process of transmitting the first Msg 3 or the second Msg 3 by the terminal device. Therefore, the network device may deliver DCI to the terminal device to indicate the terminal device to stop transmitting the first Msg 3 or the second Msg 3. This avoids a waste of transmission resources and improves utilization of transmission resources.

Optionally, a field that is in the first DCI and used to indicate to transmit the first Msg 3 or the second Msg 3, and a field that is in the second DCI and used to indicate to stop transmitting the first Msg 3 or the second Msg 3 are: a field in the first DCI and a field in the second DCI respectively that have been set in a standard and are used to indicate NDIs, a field in the first DCI and a field in the second DCI respectively that have been set in a standard and are used to indicate HARQ process number information, or a newly added field in the first DCI and a newly added field in the second DCI respectively.

The DCI has two formats: a DCI format 6-0A and a DCI format 6-0B. Each of the two formats includes a HARQ process number field and an NDI field. In the DCI format 6-0A, the HARQ process number field includes 3 bits, and the NDI field includes 1 bit. In the DCI format 6-0B, the HARQ process number field includes 1 bit, and the NDI field includes 1 bit.

The HARQ process number does not need to be indicated because only one HARQ process is required for Msg 3 transmission in the random access procedure.

This field is not used because new data is not transmitted during HARQ retransmission and repeated transmission of an Msg 3.

Therefore, the HARQ process number field or the NDI field may be used to indicate to transmit the first Msg 3 or the second Msg 3, or indicate to stop transmitting the first Msg 3 or the second Msg 3. For example, if the first Msg 3 is transmitted on the first PUSCH, when an indication of the HARQ process number field or the NDI field is 0, 0 may be used to indicate to transmit the first Msg 3; or when an indication of the HARQ process number field or the NDI field is 1, 1 may be used to indicate to stop transmitting the first Msg 3. If the second Msg 3 is transmitted on the first PUSCH, when an indication of the HARQ process number field or the NDI field is 0, 0 may be used to indicate to transmit the second Msg 3; or when an indication of the HARQ process number field or the NDI field is 1, 1 may be used to indicate to stop transmitting the second Msg 3. Certainly, 0 and 1 are merely used as examples for description herein, and should not be understood as a limitation to 0/1 and a corresponding indication function. Actually, the indication of the HARQ process number field or the NDI field may alternatively be another value, or may not be a value. For example, T/F may be used for indication, or another form may be used for indicating transmission or indicate to stop transmission.

It can be learned from the optional embodiment that, because a retransmission process requires neither a field used to indicate HARQ process number information nor a field used to indicate an NDI, a field that has been set in a standard and is used to indicate HARQ process number information or a new data indicator NDI is used to indicate to transmit the first Msg 3 or the second Msg 3, or indicate to stop transmitting the first Msg 3 or the second Msg 3. Therefore, data transmission may be stopped in advance without adding an additional indication field.

As shown in FIG. 4, another embodiment of a data transmission method provided in an embodiment of this application includes the following steps.

401: A network device sends third DCI to a terminal device.

The third DCI is used to indicate the terminal device to transmit a third Msg 3 on a second PUSCH indicated by the third DCI, and the third Msg 3 is an uplink message that is scheduled by a random access response message in a random access procedure and that carries user data.

402: After receiving the third DCI, the terminal device transmits the third Msg 3 on the second PUSCH based on the third DCI.

403: The network device sends fourth DCI to the terminal device.

The fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data.

404: After receiving the fourth DCI, the terminal device transmits, based on the fourth DCI, the fourth Msg 3 on a PUSCH indicated by the fourth DCI.

It can be learned from the embodiment corresponding to FIG. 4 that when a channel transmission condition is not good, the network device may indicate the terminal device to back off from transmitting the third Msg 3 that carries the user data to transmitting the fourth Msg 3 that does not carry the user data. This may improve a success rate of transmitting the fourth Msg 3 that does not carry the user data. In addition, after backing off to the fourth Msg 3, the terminal device may stop transmitting the fourth Msg 3 if receiving DCI that indicates to stop transmitting the fourth Msg 3.

It should be noted that the embodiment corresponding to FIG. 4 may be independent of the embodiment corresponding to FIG. 3, or may be a further optional embodiment that is based on the embodiment corresponding to FIG. 3.

Optionally, based on the embodiment corresponding to FIG. 3, or an optional embodiment of the embodiment corresponding to FIG. 3, or the embodiment corresponding to FIG. 4, a further optional embodiment may further includes:

A field that is in the third DCI and used to indicate to transmit the third Msg 3, and a field that is in the fourth DCI and used to indicate the terminal device to back off from transmitting the third Msg 3 to transmitting the fourth Msg 3 are: a field in the third DCI and a field in the fourth DCI respectively that have been set in a standard and are used to indicate NDIs, a field in the third DCI and a field in the fourth DCI respectively that have been set in a standard and are used to indicate HARQ process number information, or a newly added field in the first DCI and a newly added field in the second DCI respectively.

With reference to the foregoing descriptions of the DCI formats, the HARQ process number field, and the NDI field, a HARQ process number field or an NDI field may be used to indicate a backoff from transmitting the third Msg 3 to transmitting the fourth Msg 3. For example, if the third Msg 3 is transmitted on the second PUSCH, and an indication of the HARQ process number field or the NDI field is 0, it indicates no backoff and the third Msg 3 continues to be transmitted. If an indication of the HARQ process number field or the NDI field is 1, it indicates a backoff from transmitting the third Msg 3 to transmitting the fourth Msg 3. Certainly, 0 and 1 are merely used as examples for description herein, and should not be understood as a limitation to 0/1 and a corresponding indication function. Actually, the indication of the HARQ process number field or the NDI field may alternatively be another value, or may not be a value. For example, T/F may be used for indication, or another form may be used for indicating whether to back off.

When a DCI format is a format 6-0A, the HARQ process number field includes 3 bits. Alternatively, 1 bit in 3 bits may be used to indicate to transmit the first Msg 3 or the second Msg 3 in the embodiment corresponding to FIG. 3, or indicate to stop transmitting the first Msg 3 or the second Msg 3; and 1 bit in the other 2 bits is used to indicate to continue transmitting the third Msg 3, or indicate to back off to the fourth Msg 3. Alternatively, 3 bits may be used to represent eight different values, and four of the values are selected to represent four indication states respectively: transmission, stopping transmission, continuing transmission, and backing off. For example, the eight states may be represented by eight values from 0 to 7. 0 is used to indicate to transmit the first Msg 3 or the second Msg 3 in the embodiment corresponding to FIG. 3. 1 is used to indicate to stop transmitting the first Msg 3 or the second Msg 3. 2 is used to indicate to continue transmitting the third Msg 3 in the embodiment corresponding to FIG. 4. 3 is used to indicate to back off to the fourth Msg 3.

It can be learned from the optional embodiment that, because a retransmission process requires neither a field used to indicate HARQ process number information nor a field used to indicate a new data indicator NDI, a field that has been set in a standard and is used to indicate HARQ process number information or a new data indicator NDI is used to indicate to transmit the third Msg 3, or indicate to back off from transmitting the third Msg 3 to transmitting the fourth Msg 3. Therefore, a backoff may be performed without adding an additional indication field.

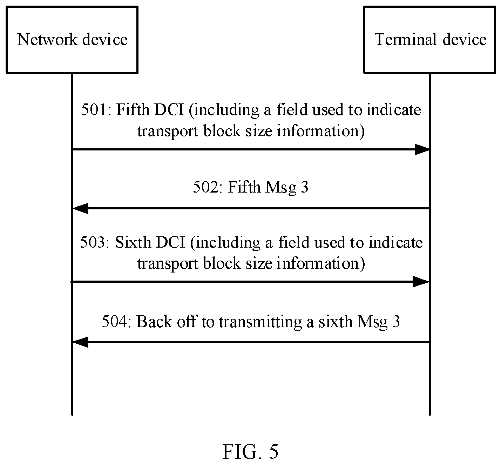

As shown in FIG. 5, another embodiment of a data transmission method provided in an embodiment of this application includes the following steps.

501: A network device sends fifth DCI to a terminal device.

The fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data.

502: After receiving the fifth DCI, the terminal device transmits the fifth Msg 3 on the third PUSCH based on a field that is in the fifth DCI and that indicates transport block size information.

A transport block size indicated by the field that is in the fifth DCI and that indicates the transport block size information is equal to a parameter value, and the parameter value is a size that is of a transport block occupied by the fifth Msg 3 and that is indicated in a random access response RAR

503: The network device sends sixth DCI to the terminal device.

504: After receiving the sixth DCI, the terminal device backs off, based on a field that is in the sixth DCI and that indicates transport block size information, from transmitting the fifth Msg 3 to transmitting a sixth Msg 3 on a PUSCH indicated by the sixth DCI.

A transport block size indicated by the field that is in the sixth DCI and that indicates the transport block size information is less than the parameter value, and the sixth Msg 3 is an uplink message that is scheduled by a random access response message in a random access procedure and that does not carry user data.

It should be noted that a transport block size for each Msg 3 that carries user data is fixed, and the size is equal to a parameter value. A transport block size for an Msg 3 that does not carry user data is less than a transport block size for an Msg 3 that carries user data. Therefore, if the transport block size indicated by the field that is in the sixth DCI and that indicates the transport block size information is less than the parameter value, it indicates that a backoff from the Msg 3 that carries the user data to the Msg 3 that carries the user data needs to be performed.

It can be learned from the embodiment corresponding to FIG. 5 that when a channel transmission condition is not good, the network device may further indicate, through a field used to indicate transport block size information, the terminal device to back off from transmitting the fifth Msg 3 that carries the user data to transmitting the sixth Msg 3 that does not carry the user data. This may improve a success rate of transmitting the sixth Msg 3 that does not carry the user data.

It should be noted that the embodiments of this application relate to the first Msg 3, the second Msg 3, the third Msg 3, the fourth Msg 3, the fifth Msg 3, and the sixth Msg 3. However, this is merely for ease of context description. Actually, only two types of Msg 3 exist: an Msg 3 that does not carry user data and an Msg 3 that carries user data.

The embodiment corresponding to FIG. 5 may be independent of the foregoing embodiments, or may be a further optional embodiment that is based on the embodiment in FIG. 3 and an optional embodiment of the embodiment in FIG. 3.

Optionally, based on any one of the foregoing embodiments or optional embodiments, an embodiment of a data transmission method provided in an embodiment of this application further includes the following steps.

The terminal device receives radio resource control RRC signaling sent by the network device, where the RRC signaling is used to indicate to determine a maximum quantity of hybrid automatic repeat request HARQ transmissions of the second Msg 3.

The terminal device determines the maximum quantity of HARQ transmissions of the second Msg 3 based on the RRC signaling.

That the second Msg 3 is transmitted on the first PUSCH may include:
transmitting, by the terminal device, the second Msg 3 based on the maximum quantity of HARQ transmissions of the second Msg 3.

Only the second Msg 3 is used herein for description. Actually, other Msgs 3 carrying user data, such as the third Msg 3 and the fifth Msg 3, may all be transmitted based on maximum quantities, determined using the solution in this implementation, of HARQ transmissions of the Msgs 3.

A maximum quantity of HARQ transmissions of the first Msg 3 may be notified through one piece of RRC signaling, and the maximum quantity of HARQ transmissions of the second Msg 3 may be notified through another piece of RRC signaling.

Because a transport block occupied by the Msg 3 carrying user data is larger in size, a maximum quantity of HARQ transmissions of the Msg 3 carrying the user data needs to be increased, to avoid frequent packet losses.

Optionally, that the terminal device determines the maximum quantity of hybrid automatic repeat request HARQ transmissions of the second Msg 3 based on the RRC signaling may include:
determining, by the terminal device, the maximum quantity of HARQ transmissions of the second Msg 3 based on a first information element and a second information element; or
determining, by the terminal device, the maximum quantity of HARQ transmissions of the second Msg 3 based on a third information element.

The first information element is an information element that is in the RRC signaling and that is used to determine the maximum quantity of HARQ transmissions of the second Msg 3. The first information element is used to indicate a value in a first set. The second information element is an information element that is in the RRC signaling and that is used to determine the maximum quantity of HARQ transmissions of the first Msg 3. The second information element is used to indicate a value in a second set. The first set is different from the second set. The third information element is an information element that is in the RRC signaling and that is used to determine the maximum quantity of HARQ transmissions of the second Msg 3. The third information element is used to indicate a value in a third set. The first set may be {1, 2, 4}, the second set may be {1, 2, 3, 4, 5, 6, 7, 8}, and the third set includes more information elements than the second set. For example, the third set is {1, 2, 3, 4, 5, 6, 7, 8, 10, 12, 16, 20, 24, 28}, or {1, 2, 3, 4, 5, 6, 7, 8, 10, 12, 16, 20, 24, 28, spare1, spare2}. spare1 and spare2 are positive integers, and spare1 is not equal to spare2. That the maximum quantity of HARQ transmissions of the second Msg 3 is determined based on the first information element and the second information element may be: selecting the value 4 from the first set as the first information element, selecting the value 8 from the second set as the second information element, and using a product of 4 and 8 as the maximum quantity of HARQ transmissions of the second Msg 3. It can be learned from the first set that only 2 bits are required to indicate the three values in the first set. A product of the value in the first set and a value in the second set can be further used to ensure a maximum of 32 HARQ transmissions of the second Msg 3. For example, that the maximum quantity of HARQ transmissions of the second Msg 3 is determined based on the third information element may be determining, based on the value 16 in the third set, that the maximum quantity of HARQ transmissions of the second Msg 3 is 16. Certainly, another value in the third set may alternatively be used to determine the maximum quantity of HARQ transmissions of the second Msg 3. It can be learned from the sixth possible implementation that, that the third set is greater than the second set means: The third set includes more information elements than the second set, and a maximum value of an information element in the third set is greater than a maximum value of an information element in the second set. In this manner, a product does not need to be calculated, and only one set is used to ensure that the maximum quantity of HARQ transmissions of the second Msg 3 may be a relatively large value. Therefore, in this embodiment, a success rate of transmitting an Msg 3 carrying data may be improved.

Optionally, that the terminal device determines the maximum quantity of HARQ transmissions of the second Msg 3 based on the first information element and the second information element may include:
determining, by the terminal device, a first value based on the first information element, and determining a second value based on the second information element; and
using, by the terminal device, a product of the first value and the second value as the maximum quantity of HARQ transmissions of the second Msg 3.

For example, referring to the foregoing example, the first value that is in the first set and that is scheduled by using the RRC signaling is 4, and the second value that is in the second set and that is scheduled by using the RRC signaling is 8. In this case, it may be determined that the maximum quantity of HARQ transmissions of the second Msg 3 is 4 x 8 = 32.

It can be learned from the embodiment that the maximum quantity of HARQ transmissions of the second Msg 3 is determined by a product of two values. This may effectively increase a maximum quantity of HARQ transmissions of an Msg 3 that carries data, and further improves a success rate of transmitting the Msg 3 that carries data.

The foregoing plurality of data transmission method embodiments describe solutions of stopping data in advance, backing off data, and determining the maximum quantity of HARQ transmissions of the Msg 3 that carries data. The following describes a communications device in the embodiments of this application with reference to the accompanying drawings. The communications device in the embodiments of this application may include a terminal device, a network device, and a chip system. The communications device has different functions when playing different roles.

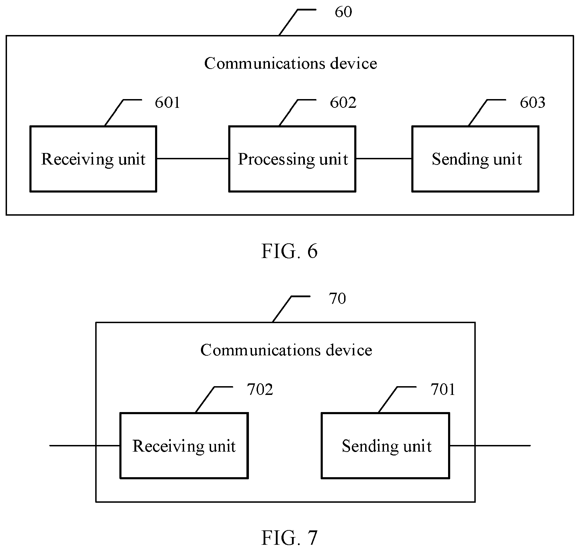

As shown in FIG. 6, a communications device provided in an embodiment of this application includes a terminal device or a chip system. A communications device 60 includes a receiving unit 601, a processing unit 602, and a sending unit 603.

The receiving unit 601 is configured to receive first downlink control information DCI from a network device, where the first DCI is used to indicate the terminal device to transmit a first message Msg 3 or a second Msg 3 on a first physical uplink shared channel PUSCH indicated by the first DCI. The first Msg 3 is an uplink message that is scheduled by a random access response message in a random access procedure and that does not carry user data, and the second Msg 3 is an uplink message that is scheduled by a random access response message in a random access procedure and that carries user data.

The processing unit 602 is configured to determine, based on the first DCI received by the receiving unit 601, to transmit the first Msg 3 or the second Msg 3 on the first PUSCH.

The sending unit 603 is configured to transmit the first Msg 3 or the second Msg 3 on the first PUSCH.

The receiving unit 601 is further configured to receive second DCI from the network device, where the second DCI is used to indicate the terminal device to stop transmitting the first Msg 3 or the second Msg 3.

The processing unit 602 is further configured to stop transmitting the first Msg 3 or the second Msg 3 based on the second DCI.

Before a quantity of repeated transmissions is reached in a process of transmitting the first Msg 3 or the second Msg 3, the communications device provided in this embodiment may stop transmitting the first Msg 3 or the second Msg 3 based on an indication in DCI delivered by the network device. This avoids a waste of transmission resources and improves utilization of transmission resources.

With reference to FIG. 6, in another embodiment of the communications device 60 provided in this application,
the receiving unit 601 is further configured to receive third DCI from the network device, where the third DCI is used to indicate the terminal device to transmit a third Msg 3 on a second PUSCH indicated by the third DCI, and the third Msg 3 is an uplink message that is scheduled by a random access response message in a random access procedure and that carries user data.

The processing unit 602 is further configured to determine, based on the third DCI received by the receiving unit 601, to transmit the third Msg 3 on the second PUSCH.

The sending unit 603 is further configured to transmit the third Msg 3 on the second PUSCH.

The receiving unit 601 is further configured to receive fourth DCI from the network device, where the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data.

The processing unit 602 is further configured to back off from the third Msg 3 to the fourth Msg 3 based on the fourth DCI.

The sending unit 603 is further configured to transmit the fourth Msg 3 on a PUSCH indicated by the fourth DCI.

When a channel transmission condition is not good, the communications device provided in this embodiment may further back off from transmitting the third Msg 3 that carries the user data to transmitting the fourth Msg 3 that does not carry the user data. This may improve a success rate of transmitting the fourth Msg 3 that does not carry the user data.

With reference to FIG. 6, in another embodiment of the communications device 60 provided in this application,
the receiving unit 601 is further configured to receive fifth DCI from the network device, where the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data.

The processing unit 602 is further configured to determine, based on a field that is in the fifth DCI and that indicates transport block size information, to transmit the fifth Msg 3 on the third PUSCH, where a transport block size indicated by the field that is in the fifth DCI and that indicates the transport block size information is equal to a parameter value, and the parameter value is a size that is of a transport block occupied by the fifth Msg 3 and that is indicated in a random access response RAR.

The sending unit 603 is further configured to transmit the fifth Msg 3 on the third PUSCH.

The receiving unit 601 is further configured to receive sixth DCI from the network device.

The processing unit 602 is further configured to determine, based on a field that is in the sixth DCI and that indicates transport block size information, to back off from the fifth Msg 3 to a sixth Msg 3, where a transport block size indicated by the field that is in the sixth DCI and that indicates the transport block size information is less than the parameter value, and the sixth Msg 3 is an uplink message that is scheduled by a random access response message in a random access procedure and that does not carry user data.

The sending unit 603 is further configured to transmit the sixth Msg 3 on a PUSCH indicated by the sixth DCI.

When a channel transmission condition is not good, the communications device provided in this embodiment may further indicate, through a field used to indicate transport block size information, to back off from transmitting the fifth Msg 3 that carries the user data to transmitting the sixth Msg 3 that does not carry the user data. This may improve a success rate of transmitting the sixth Msg 3 that does not carry the user data.

Optionally, in another embodiment of the communications device 60 provided in this application,
the receiving unit 601 is further configured to receive radio resource control RRC signaling sent by the network device, where the RRC signaling is used to indicate to determine a maximum quantity of hybrid automatic repeat request HARQ transmissions of the second Msg 3.

The processing unit 602 is further configured to determine the maximum quantity of HARQ transmissions of the second Msg 3 based on the RRC signaling received by the receiving unit.

The sending unit 603 is further configured to transmit the second Msg 3 based on the maximum quantity that is of HARQ transmissions of the second Msg 3 and that is determined by the processing unit.

It can be learned from this embodiment that, because a transport block occupied by an Msg 3 carrying user data is larger in size, a maximum quantity of HARQ transmissions of the Msg 3 carrying the user data needs to be increased, to avoid frequent packet losses.

Optionally, in another embodiment of the communications device 60 provided in this application,
the processing unit 602 is specifically configured to: determine the maximum quantity of HARQ transmissions of the second Msg 3 based on a first information element and a second information element; or determine the maximum quantity of HARQ transmissions of the second Msg 3 based on the first information element. The first information element is an information element that is in the RRC signaling and that is used to determine the maximum quantity of HARQ transmissions of the second Msg 3. The first information element is used to indicate a value in a first set. The second information element is an information element that is in the RRC signaling and that is used to determine a maximum quantity of HARQ transmissions of the first Msg 3.The second information element is used to indicate a value in a second set. The first set is different from the second set.

It can be learned from the embodiment that the first set is greater than the second set, and therefore the maximum quantity of HARQ transmissions of the second Msg 3 is greater than the maximum quantity of HARQ transmissions of the first Msg 3. This may improve a success rate of transmitting the Msg 3 that carries data.

Optionally, in another embodiment of the communications device 60 provided in this application,
the processing unit 602 is specifically configured to: determine a first value based on the first information element, determine a second value based on the second information element, and use a product of the first value and the second value as the maximum quantity of HARQ transmissions of the second Msg 3.

It can be learned from the embodiment that the maximum quantity of HARQ transmissions of the second Msg 3 is determined by a product of two values. This may effectively increase a maximum quantity of HARQ transmissions of an Msg 3 that carries data, and further improves a success rate of transmitting the Msg 3 that carries data.

As shown in FIG. 7, a communications device provided in an embodiment of this application includes a network device or a chip system. An embodiment of a communications device 70 includes a sending unit 701 and a receiving unit 702.

The sending unit 701 is configured to send first downlink control information DCI to a terminal device, where the first DCI is used to indicate the terminal device to transmit a first message Msg 3 or a second Msg 3 on a first physical uplink shared channel PUSCH indicated by the first DCI. The first Msg 3 is an uplink message that is scheduled by a random access response message in a random access procedure and that does not carry user data, and the second Msg 3 is an uplink message that is scheduled by a random access response message in a random access procedure and that carries user data.

The receiving unit 702 is configured to receive, on the first PUSCH, the first Msg 3 or the second Msg 3 transmitted by the terminal device.

The sending unit 701 is further configured to send second DCI to the terminal device, where the second DCI is used to indicate the terminal device to stop transmitting the first Msg 3 or the second Msg 3.

Optionally, in another embodiment of the communications device 70 provided in this application,
the sending unit 701 is further configured to send third DCI to the terminal device, where the third DCI is used to indicate the terminal device to transmit a third Msg 3 on a second PUSCH indicated by the third DCI, and the third Msg 3 is an uplink message that is scheduled by a random access response message in a random access procedure and that carries user data.

The receiving unit 702 is further configured to receive, on the second PUSCH, the third Msg 3 transmitted by the terminal device.

The sending unit 701 is further configured to send fourth DCI to the terminal device, where the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data.

Optionally, in another embodiment of the communications device 70 provided in this application,
the sending unit 701 is further configured to send fifth DCI to the terminal device, where the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data.

The receiving unit 702 is further configured to receive, on the third PUSCH, the fifth Msg 3 transmitted by the terminal device based on a field that is in the fifth DCI and that indicates transport block size information, where a transport block size indicated by the field that is in the fifth DCI and that indicates the transport block size information is equal to a parameter value, and the parameter value is a size that is of a transport block occupied by the fifth Msg 3 and that is indicated in a random access response RAR

The sending unit 701 is further configured to send sixth DCI to the terminal device.

The receiving unit 702 is further configured to receive a sixth Msg 3 on a PUSCH indicated by the sixth DCI, where a transport block size indicated by a field that is in the sixth DCI and that indicates transport block size information is less than the parameter value, and the sixth Msg 3 is an uplink message that is scheduled by a random access response message in a random access procedure and that does not carry user data.

The processing unit 602 in the communications device 60 may be the processor 101 in the terminal device shown in FIG. 2. The receiving unit 601 and the sending unit 603 may be the transceiver 103 in FIG. 2. The sending unit 701 and the receiving unit 702 in the communications device 70 may be the transceiver 203 in FIG. 2. For understanding of functions of the communications device 60, refer to the steps performed by the terminal device in FIG. 3 to FIG. 5. For understanding of functions of the communications device 70, refer to the steps performed by the network device in FIG. 3 to FIG. 5.

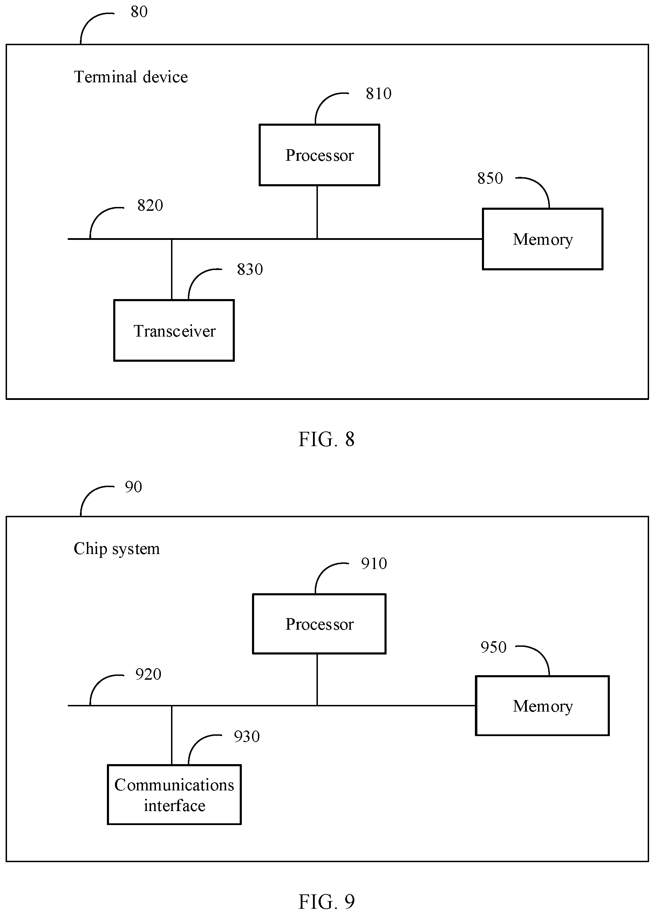

To facilitate understanding of functions of components of the terminal device and the network device that are shown in FIG. 2 in a data transmission process of this application, the following uses the terminal device as an example for description with reference to FIG. 8.

FIG. 8 is a schematic structural diagram of a terminal device 80 according to an embodiment of this application. The terminal device 80 includes at least one processor 810, a memory 850, and a transceiver 830. The transceiver may include a receiver and a transmitter. The memory 850 may include a read-only memory and/or a random access memory, and provide an operation instruction and data for the processor 810. A part of the memory 850 may further include a nonvolatile random access memory (NVRAM).

In some implementations, the memory 850 stores the following elements: an executable module or a data structure, a subset thereof, or an extended set thereof.

In this embodiment of this application, a corresponding operation is performed by invoking the operation instruction (the operation instruction may be stored in an operating system) stored in the memory 850. The processor 810 controls an operation of the terminal device 80. The processor 810 may also be referred to as a CPU (Central Processing Unit, central processing unit). The memory 850 may include a read-only memory and a random access memory, and provide an instruction and data for the processor 810. A part of the memory 850 may further include a nonvolatile random access memory (NVRAM). In specific application, components of the terminal device 80 are coupled together by a bus system 820. In addition to a data bus, the bus system 820 may further include a power bus, a control bus, a status signal bus, and the like. However, for clear description, various buses in the figure are marked as the bus system 820.

The methods disclosed in the foregoing embodiments of this application may be applied to the processor 810 or may be implemented by the processor 810. The processor 810 may be an integrated circuit chip and has a signal processing capability. In an implementation process, the steps in the foregoing methods can be implemented by using a hardware integrated logic circuit in the processor 810 or by using instructions in a form of software. The processor 810 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 810 may implement or perform the methods, the steps, and logical block diagrams disclosed in the embodiments of this application. The general-purpose processor may be a microprocessor, any conventional processor, or the like. Steps of the methods disclosed with reference to the embodiments of this application may be directly performed and completed by using a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 850. The memory 850 may be a physically independent unit, or may be integrated into the processor 810. The processor 810 reads information from the memory 850, and completes the steps of the foregoing methods in combination with hardware of the processor 810.

Optionally, the transceiver 830 is configured to perform a step of sending a message by the terminal device in the embodiments shown in FIG. 3 to FIG. 5 or in another optional embodiment.

The processor 810 is configured to perform a step of data processing performed by the terminal device in the embodiments shown in FIG. 3 to FIG. 5 or in another optional embodiment.

A structure of a network device may also be understood with reference to FIG. 8. A corresponding transceiver and processor in the network device may perform a corresponding receiving or processing step respectively performed by the network device in the embodiments shown in FIG. 3 to FIG. 5 or in another optional embodiment.

FIG. 9 is a schematic structural diagram of another implementation of a chip system 90 according to an embodiment of this application. The chip system 90 includes at least one processor 910, a memory 950, and a communications interface 930. The memory 950 may include a read-only memory and a random access memory, and provide an operation instruction and data for the processor 910. A part of the memory 950 may further include a nonvolatile random access memory (NVRAM).

In some implementations, the memory 950 stores the following elements: an executable module or a data structure, a subset thereof, or an extended set thereof.

In this embodiment of this application, a corresponding operation is performed by invoking the operation instruction (the operation instruction may be stored in an operating system) stored in the memory 950.

In a possible implementation, structures of the chip system and a chip system used by a network device are similar, but different apparatuses use different chip systems to implement respective functions.

The processor 910 controls an operation of the chip system. The processor 910 may also be referred to as a CPU (Central Processing Unit, central processing unit). The memory 950 may include a read-only memory and a random access memory, and provide an instruction and data to the processor 910. A part of the memory 950 may further include a nonvolatile random access memory (NVRAM). In specific application, components of the chip system 110 are coupled together by a bus system 920. In addition to a data bus, the bus system 920 may further include a power bus, a control bus, a status signal bus, and the like. However, for clear description, various buses in the figure are marked as the bus system 920.

The methods disclosed in the embodiments of this application may be applied to the processor 910, or may be implemented by the processor 910. The processor 910 may be an integrated circuit chip and has a signal processing capability. In an implementation process, the steps in the foregoing methods can be implemented by using a hardware integrated logic circuit in the processor 910 or by using instructions in a form of software. The processor 910 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 910 may implement or perform the methods, the steps, and logical block diagrams disclosed in the embodiments of this application. The general-purpose processor may be a microprocessor, any conventional processor, or the like. Steps of the methods disclosed with reference to the embodiments of this application may be directly performed and completed by using a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 950. The memory 950 may be a physically independent unit, or may be integrated into the processor 910. The processor 910 reads information from the memory 950, and completes the steps of the foregoing methods in combination with hardware of the processor 910.

Optionally, the communications interface 930 is configured to perform steps of receiving and sending data by the terminal device or the network device in the embodiments shown in FIG. 3 to FIG. 5 or in another optional embodiment.

The processor 910 is configured to perform a step of signal data processing performed by the terminal device or the network device in the embodiments shown in FIG. 3 to FIG. 5 or in another optional embodiment.

All or some of the foregoing embodiments may be implemented by using software, hardware, firmware, or any combination thereof. When the software is used to implement the embodiments, all or some of the embodiments may be implemented in a form of a computer program product.

The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like.

A person of ordinary skill in the art may understand that all or some of the steps of the methods in the embodiments may be implemented by a program instructing relevant hardware. The program may be stored in a computer-readable storage medium. The storage medium may include a ROM, a RAM, a magnetic disk, an optical disc, or the like.

The data transmission method, device, computer-readable storage medium, and chip system provided in the embodiments of this application are described in detail above. The principle and implementation of this application are described herein through specific examples. The description about the embodiments is merely provided to help understand the method and core ideas of this application. In addition, a person of ordinary skill in the art may make variations and modifications to this application in terms of the specific implementations and application scopes based on the ideas of this application. Therefore, the content of this specification shall not be construed as a limitation to this application.

## Claims

1. A data transmission method, comprising:
receiving, by a terminal device, first downlink control information DCI from a network device, wherein the first DCI is used to indicate the terminal device to transmit a first message Msg 3 or a second Msg 3 on a first physical uplink shared channel PUSCH indicated by the first DCI, the first Msg 3 is an uplink message that is scheduled by a random access response message in a random access procedure and that does not carry user data, and the second Msg 3 is an uplink message that is scheduled by a random access response message in a random access procedure and that carries user data;
transmitting, by the terminal device, the first Msg 3 or the second Msg 3 on the first PUSCH based on the first DCI;
receiving, by the terminal device, second DCI from the network device, wherein the second DCI is used to indicate the terminal device to stop transmitting the first Msg 3 or the second Msg 3; and
stopping, by the terminal device based on the second DCI, transmitting the first Msg 3 or the second Msg 3.

2. The method according to claim 1, wherein
a field that is in the first DCI and used to indicate to transmit the first Msg 3 or the second Msg 3, and a field that is in the second DCI and used to indicate to stop transmitting the first Msg 3 or the second Msg 3 are: a field in the first DCI and a field in the second DCI respectively that have been set in a standard and are used to indicate new data indicators NDI, a field in the first DCI and a field in the second DCI respectively that have been set in a standard and are used to indicate hybrid automatic repeat request HARQ process number information, or a newly added field in the first DCI and a newly added field in the second DCI respectively.

3. The method according to claim 1 or 2, wherein the method further comprises:
receiving, by the terminal device, third DCI from the network device, wherein the third DCI is used to indicate the terminal device to transmit a third Msg 3 on a second PUSCH indicated by the third DCI, and the third Msg 3 is an uplink message that is scheduled by a random access response message in a random access procedure and that carries user data;
transmitting, by the terminal device, the third Msg 3 on the second PUSCH based on the third DCI;
receiving, by the terminal device, fourth DCI from the network device, wherein the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data; and
transmitting, by the terminal device based on the fourth DCI, the fourth Msg 3 on a PUSCH indicated by the fourth DCI.

4. The method according to claim 3, wherein
a field that is in the third DCI and used to indicate to transmit the third Msg 3, and a field that is in the fourth DCI and used to indicate the terminal device to back off from transmitting the third Msg 3 to transmitting the fourth Msg 3 are: a field in the third DCI and a field in the fourth DCI respectively that have been set in a standard and are used to indicate new data indicators NDI, a field in the third DCI and a field in the fourth DCI respectively that have been set in a standard and are used to indicate hybrid automatic repeat request HARQ process number information, or a newly added field in the first DCI and a newly added field in the second DCI respectively.

5. The method according to claim 1, wherein the method further comprises:
receiving, by the terminal device, fifth DCI from the network device, wherein the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data;
transmitting, by the terminal device, the fifth Msg 3 on the third PUSCH based on a field that is in the fifth DCI and that indicates transport block size information, wherein a transport block size indicated by the field that is in the fifth DCI and that indicates the transport block size information is equal to a parameter value, and the parameter value is a size that is of a transport block occupied by the fifth Msg 3 and that is indicated in a random access response RAR;
receiving, by the terminal device, sixth DCI from the network device; and
backing off, by the terminal device based on a field that is in the sixth DCI and that indicates transport block size information, from transmitting the fifth Msg 3 to transmitting a sixth Msg 3 on a PUSCH indicated by the sixth DCI, wherein a transport block size indicated by the field that is in the sixth DCI and that indicates the transport block size information is less than the parameter value, and the sixth Msg 3 is an uplink message that is scheduled by a random access response message in a random access procedure and that does not carry user data.

6. The method according to any one of claims 1 to 5, wherein the method further comprises:
receiving, by the terminal device, radio resource control RRC signaling sent by the network device, wherein the RRC signaling is used to indicate to determine a maximum quantity of hybrid automatic repeat request HARQ transmissions of the second Msg 3;
determining, by the terminal device, the maximum quantity of HARQ transmissions of the second Msg 3 based on the RRC signaling; and
the transmitting the second Msg 3 on the first PUSCH comprises:
transmitting, by the terminal device, the second Msg 3 based on the maximum quantity of HARQ transmissions of the second Msg 3.

7. The method according to claim 6, wherein the determining, by the terminal device, the maximum quantity of hybrid automatic repeat request HARQ transmissions of the second Msg 3 based on the RRC signaling comprises:
determining, by the terminal device, the maximum quantity of HARQ transmissions of the second Msg 3 based on a first information element and a second information element; or
determining, by the terminal device, the maximum quantity of HARQ transmissions of the second Msg 3 based on a third information element; wherein
the first information element is an information element that is in the RRC signaling and that is used to determine the maximum quantity of HARQ transmissions of the second Msg 3, and the first information element is used to indicate a value in a first set; the second information element is an information element that is in the RRC signaling and that is used to determine a maximum quantity of HARQ transmissions of the first Msg 3, the second information element is used to indicate a value in a second set, and the first set is different from the second set; and the third information element is an information element that is in the RRC signaling and that is used to determine the maximum quantity of HARQ transmissions of the second Msg 3, and the third information element is used to indicate a value in a third set.

8. The method according to claim 7, wherein the determining, by the terminal device, the maximum quantity of HARQ transmissions of the second Msg 3 based on the first information element and a second information element comprises:
determining, by the terminal device, a first value based on the first information element, and determining a second value based on the second information element; and
using, by the terminal device, a product of the first value and the second value as the maximum quantity of HARQ transmissions of the second Msg 3.

9. A data transmission method, comprising:
sending, by a network device, first downlink control information DCI to a terminal device, wherein the first DCI is used to indicate the terminal device to transmit a first message Msg 3 or a second Msg 3 on a first physical uplink shared channel PUSCH indicated by the first DCI, the first Msg 3 is an uplink message that is scheduled by a random access response message in a random access procedure and that does not carry user data, and the second Msg 3 is an uplink message that is scheduled by a random access response message in a random access procedure and that carries user data;
receiving, by the network device on the first PUSCH, the first Msg 3 or the second Msg 3 transmitted by the terminal device; and
sending, by the network device, second DCI to the terminal device, wherein the second DCI is used to indicate the terminal device to stop transmitting the first Msg 3 or the second Msg 3.

10. The method according to claim 9, wherein
a field that is in the first DCI and used to indicate to transmit the first Msg 3 or the second Msg 3, and a field that is in the second DCI and used to indicate to stop transmitting the first Msg 3 or the second Msg 3 are: a field in the first DCI and a field in the second DCI respectively that have been set in a standard and are used to indicate NDIs, a field in the first DCI and a field in the second DCI respectively that have been set in a standard and are used to indicate hybrid automatic repeat request HARQ process number information, or a newly added field in the first DCI and a newly added field in the second DCI respectively.

11. The method according to claim 9 or 10, wherein the method further comprises:
sending, by the network device, third DCI to the terminal device, wherein the third DCI is used to indicate the terminal device to transmit a third Msg 3 on a second PUSCH indicated by the third DCI, and the third Msg 3 is an uplink message that is scheduled by a random access response message in a random access procedure and that carries user data;
receiving, by the network device on the second PUSCH, the third Msg 3 transmitted by the terminal device; and
sending, by the network device, fourth DCI to the terminal device, wherein the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data.

12. The method according to claim 11, wherein
a field that is in the third DCI and used to indicate to transmit the third Msg 3, and a field that is in the fourth DCI and used to indicate the terminal device to back off from transmitting the third Msg 3 to transmitting the fourth Msg 3 are: a field in the third DCI and a field in the fourth DCI respectively that have been set in a standard and are used to indicate NDIs, a field in the third DCI and a field in the fourth DCI respectively that have been set in a standard and are used to indicate hybrid automatic repeat request HARQ process number information, or a newly added field in the first DCI and a newly added field in the second DCI respectively.

13. The method according to claim 9, wherein the method further comprises:
sending, by the network device, fifth DCI to the terminal device, wherein the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data;
receiving, by the network device on the third PUSCH, the fifth Msg 3 transmitted by the terminal device based on a field that is in the fifth DCI and that indicates transport block size information, wherein a transport block size indicated by the field that is in the fifth DCI and that indicates the transport block size information is equal to a parameter value, and the parameter value is a size that is of a transport block occupied by the fifth Msg 3 and that is indicated in a random access response RAR;
sending, by the network device, sixth DCI to the terminal device; and
receiving, by the network device, a sixth Msg 3 on a PUSCH indicated by the sixth DCI, wherein a transport block size indicated by a field that is in the sixth DCI and that indicates transport block size information is less than the parameter value, and the sixth Msg 3 is an uplink message that is scheduled by a random access response message in a random access procedure and that does not carry user data.

14. A communications device, comprising:
a receiving unit, configured to receive first downlink control information DCI from a network device, wherein the first DCI is used to indicate the terminal device to transmit a first message Msg 3 or a second Msg 3 on a first physical uplink shared channel PUSCH indicated by the first DCI, the first Msg 3 is an uplink message that is scheduled by a random access response message in a random access procedure and that does not carry user data, and the second Msg 3 is an uplink message that is scheduled by a random access response message in a random access procedure and that carries user data;
a processing unit, configured to determine, based on the first DCI received by the receiving unit, to transmit the first Msg 3 or the second Msg 3 on the first PUSCH; and
a sending unit, configured to transmit the first Msg 3 or the second Msg 3 on the first PUSCH; wherein
the receiving unit is further configured to receive second DCI from the network device, wherein the second DCI is used to indicate the terminal device to stop transmitting the first Msg 3 or the second Msg 3; and
the processing unit is further configured to stop transmitting the first Msg 3 or the second Msg 3 based on the second DCI.

15. The communications device according to claim 14, wherein
the receiving unit is further configured to receive third DCI from the network device, wherein the third DCI is used to indicate the terminal device to transmit a third Msg 3 on a second PUSCH indicated by the third DCI, and the third Msg 3 is an uplink message that is scheduled by a random access response message in a random access procedure and that carries user data;
the processing unit is further configured to determine, based on the third DCI received by the receiving unit, to transmit the third Msg 3 on the second PUSCH;
the sending unit is further configured to transmit the third Msg 3 on the second PUSCH;
the receiving unit is further configured to receive fourth DCI from the network device, wherein the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data;
the processing unit is further configured to back off from the third Msg 3 to the fourth Msg 3 based on the fourth DCI; and
the sending unit is further configured to transmit the fourth Msg 3 on a PUSCH indicated by the fourth DCI.

16. The communications device according to claim 14, wherein
the receiving unit is further configured to receive fifth DCI from the network device, wherein the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data;
the processing unit is further configured to determine, based on a field that is in the fifth DCI and that indicates transport block size information, to transmit the fifth Msg 3 on the third PUSCH, wherein a transport block size indicated by the field that is in the fifth DCI and that indicates the transport block size information is equal to a parameter value, and the parameter value is a size that is of a transport block occupied by the fifth Msg 3 and that is indicated in a random access response RAR;
the sending unit is further configured to transmit the fifth Msg 3 on the third PUSCH;
the receiving unit is further configured to receive sixth DCI from the network device;
the processing unit is further configured to determine, based on a field that is in the sixth DCI and that indicates transport block size information, to back off from the fifth Msg 3 to a sixth Msg 3, wherein a transport block size indicated by the field that is in the sixth DCI and that indicates the transport block size information is less than the parameter value, and the sixth Msg 3 is an uplink message that is scheduled by a random access response message in a random access procedure and that does not carry user data; and
the sending unit is further configured to transmit the sixth Msg 3 on a PUSCH indicated by the sixth DCI.

17. The communications device according to any one of claims 14 to 16, wherein
the receiving unit is further configured to receive radio resource control RRC signaling sent by the network device, wherein the RRC signaling is used to indicate to determine a maximum quantity of hybrid automatic repeat request HARQ transmissions of the second Msg 3;
the processing unit is further configured to determine the maximum quantity of HARQ transmissions of the second Msg 3 based on the RRC signaling received by the receiving unit; and
the sending unit is further configured to transmit the second Msg 3 based on the maximum quantity that is of HARQ transmissions of the second Msg 3 and that is determined by the processing unit.

18. The communications device according to claim 17, wherein
the processing unit is specifically configured to: determine the maximum quantity of HARQ transmissions of the second Msg 3 based on a first information element and a second information element, or determine the maximum quantity of HARQ transmissions of the second Msg 3 based on a third information element, wherein the first information element is an information element that is in the RRC signaling and that is used to determine the maximum quantity of HARQ transmissions of the second Msg 3, and the first information element is used to indicate a value in a first set; the second information element is an information element that is in the RRC signaling and that is used to determine a maximum quantity of HARQ transmissions of the first Msg 3, the first information element is used to indicate a value in a second set, and the first set is different from the second set; and the third information element is an information element that is in the RRC signaling and that is used to determine the maximum quantity of HARQ transmissions of the second Msg 3, and the third information element is used to indicate a value in a third set.

19. The communications device according to claim 18, wherein
the processing unit is specifically configured to: determine a first value based on the first information element, determine a second value based on the second information element, and use a product of the first value and the second value as the maximum quantity of HARQ transmissions of the second Msg 3.

20. A communications device, comprising:
a sending unit, configured to send first downlink control information DCI to a terminal device, wherein the first DCI is used to indicate the terminal device to transmit a first message Msg 3 or a second Msg 3 on a first physical uplink shared channel PUSCH indicated by the first DCI, the first Msg 3 is an uplink message that is scheduled by a random access response message in a random access procedure and that does not carry user data, and the second Msg 3 is an uplink message that is scheduled by a random access response message in a random access procedure and that carries user data;
a receiving unit, configured to receive, on the first PUSCH, the first Msg 3 or the second Msg 3 transmitted by the terminal device; and
a sending unit, configured to send second DCI to the terminal device, wherein the second DCI is used to indicate the terminal device to stop transmitting the first Msg 3 or the second Msg 3.

21. The communications device according to claim 20, wherein
the sending unit is further configured to send third DCI to the terminal device, wherein the third DCI is used to indicate the terminal device to transmit a third Msg 3 on a second PUSCH indicated by the third DCI, and the third Msg 3 is an uplink message that is scheduled by a random access response message in a random access procedure and that carries user data; and
the receiving unit is further configured to receive, on the second PUSCH, the third Msg 3 transmitted by the terminal device; wherein
the sending unit is further configured to send fourth DCI to the terminal device, wherein the fourth DCI is used to indicate the terminal device to back off from transmitting the third Msg 3 to transmitting a fourth Msg 3, and the fourth Msg 3 is an uplink message that is scheduled by a random access response message in a random access procedure and that does not carry user data.

22. The communications device according to claim 20, wherein
the sending unit is further configured to send fifth DCI to the terminal device, wherein the fifth DCI is used to indicate the terminal device to transmit a fifth Msg 3 on a third PUSCH indicated by the fifth DCI, and the fifth Msg 3 is an uplink message that is scheduled by a random access response message in a random access procedure and that carries user data;
the receiving unit is further configured to receive, on the third PUSCH, the fifth Msg 3 transmitted by the terminal device based on a field that is in the fifth DCI and that indicates transport block size information, wherein a transport block size indicated by the field that is in the fifth DCI and that indicates the transport block size information is equal to a parameter value, and the parameter value is a size that is of a transport block occupied by the fifth Msg 3 and that is indicated in a random access response RAR;
the sending unit is further configured to send sixth DCI to the terminal device; and
the receiving unit is further configured to receive a sixth Msg 3 on a PUSCH indicated by the sixth DCI, wherein a transport block size indicated by a field that is in the sixth DCI and that indicates transport block size information is less than the parameter value, and the sixth Msg 3 is an uplink message that is scheduled by a random access response message in a random access procedure and that does not carry user data.
